# EUROPÄISCHE PATENTSCHRIFT

(11) **EP 1 501 734 B1**
(45) Veröffentlichungstag und Bekanntmachung des Hinweises auf die Patenterteilung: **01.03.2006**
(21) Anmeldenummer: 03732305.2
(22) Anmeldetag: 02.05.2003
(51) Int. Cl.: B65D 5/74

(54) **VERFAHREN UND VORRISCHTUNG ZUM APPLIZIEREN VON AUSGIESSELEMENTEN AN PACKUNGEN**
METHOD AND DEVICE FOR APPLYING POURING ELEMENTS TO PACKAGING AND PACKAGING PRODUCED ACCORDING TO SAID METHOD
PROCEDE ET DISPOSITIF PERMETTANT D'APPLIQUER DES ELEMENTS VERSEURS SUR DES EMBALLAGES ET EMBALLAGES AINSI OBTENUS

(30) Priorität: 04.05.2002 DE 10220058
(43) Veröffentlichungstag der Anmeldung: 02.02.2005
(73) Patentinhaber: SIG Combibloc GmbH, 52441 Linnich (DE)
(72) Erfinder: BREDT, Hannes, 52511 Geilenkirchen (DE); BALTES, Klaus, 50127 Bergheim (DE)
(74) Vertreter: Cohausz & Florack
(86) Internationale Anmeldenummer: PCT/EP2003/004590
(87) Internationale Veröffentlichungsnummer: WO 2003/093120

(56) Entgegenhaltungen:
- EP-A- 0 528 272
- WO-A-95/10408
- DE-U- 8 307 929
- US-B1- 6 228 011

## Beschreibung

Die Erfindung betrifft ein Verfahren und eine Vorrichtung zum Applizieren von Ausgießelementen an Packungen, insbesondere quaderförmigen Mehrschichtverbundverpackungen für Flüssigkeiten sowie eine so hergestellte Packung.

Als Mehrschichtverbundpackungen ausgebildete Getränkepackungen sind in vielfacher Ausfertigung bekannt, beispielsweise als Flachgiebelverbundpackungen. Sie finden vornehmlich auf dem Gebiet der Flüssigkeitsverpackung im Zusammenhang mit Kalt-, Kalt-Steril-, Heiß- und aseptischer Füllung Verwendung.

Um die Handhabung solcher Verbundpackungen zu verbessern und insbesondere deren Wiederverschließbarkeit zu erreichen, ist man mehr und mehr dazu übergegangen, die Verbundpackungen mit wiederverschließbaren Ausgießelementen zu versehen. Diese Ausgießelemente können ein- oder mehrteilig ausgeführt sein und weisen in der Regel ein Öffnungselement sowie einen Deckel auf. Heute sind nahezu ausschließlich solche Packungen mit wiederverschließbaren Ausgießelementen marktüblich. Aus der EP-B-0 580 593 ist beispielsweise eine Mehrschichtverbundpackung bekannt, die mit einem Ausgießelement versehen ist, welches zum erstmaligen Öffnen der Packung dient und zu seiner Wiederverschließbarkeit mit einem entsprechenden Verschlusselement ausgestattet ist. Dort ist im Bereich der Kartonschicht und äußeren PE-Schicht des Verbundmaterials der Packung eine Einkerbung zur Schwächung des Giebelmaterials vorgesehen, in die zum Öffnen der Packung ein mit dem Ausgießelement einstückig verbundenes Öffnungselement in das Packungsmaterial hineingedrückt wird.

Ferner sind auch Packungen bekannt, die mit Ausgießelementen mit Schraubverschlüssen versehen sind. Auch hier ist es bereits bekannt, die Schraubverschlüsse auf die (noch geschlossene) Packung zu applizieren, oder aber diese durch eine Öffnung im Kopfbereich der Mehrschichtverbundpackung zu bringen und dort, meist mit einem mit der Innenwandung zu verbindenden Flansch zu befestigen. Gerade bei letztgenannten Ausgießern ist es problematisch, die Applikation des Schraubdeckel-Ausgießelementes erst nach der Füllung der Packung durchzuführen, da hier hygienische Beeinträchtigungen des Produktes und/oder der Packung bzw. dem einzubringenden Ausgießer zu befürchten sind.

Die Erfindung liegt daher die Aufgabe zugrunde, das eingangs genannte und zuvor näher beschriebene Verfahren und eine entsprechende Vorrichtung zum Applizieren von Ausgießelementen an Packungen so auszugestalten und weiterzubilden, dass ein automatisiertes Applizieren mit einem durch eine Stanzöffnung einzubringenden Ausgießelement ermöglicht wird.

Gelöst wird diese Aufgabe verfahrensmäßig durch die folgenden Schritte:
- Zuführen von flachgefalteten Packungsmänteln,
- Vereinzeln, ggf. Vorfalten und Auffalten der Packungsmäntel zu jeweils einem rechteckigen Schlauch,
- Transport des wenigstens einen Schlauches in eine Stanzstation, in der eine Öffnung zur Aufnahme des Ausgießelementes in den Schlauch gestanzt wird,
- Transport des wenigstens einen Schlauches in eine Station zum Applizieren von Ausgießelementen in die in der Stanzstation hergestellten Öffnungen,
- Herstellen des Packungsbodens und
- Füllen sowie Verschließen der fertigen Packung.

Erfindungsgemäß ist erkannt worden, dass eine Applikation des Ausgießelementes noch vor Herstellung des Packungsbodens zu einer Erleichterung des Herstellungsablaufs führt, da bei nach diesem Verfahren hergestellten Packungen die unmittelbar vor dem Befüllen stattfindende Sterilisation sowohl die Packung als auch das zuvor eingebrachte und fest mit der Packungswandung verbundene Ausgießelement gleichzeitig sterilisiert werden.

Eine erfindungsgemäße Vorrichtung löst die Aufgabe durch eine Stanzstation, in der eine Öffnung zur Aufnahme eines Ausgießelementes in einen zugeführten aufgefalteten Schlauch gestanzt wird, eine Station zum Applizieren der Ausgießelemente in die in der Stanzstation hergestellten Öffnungen sowie gegebenenfalls weitere Stationen zum Herstellen des Packungsbodens und Füllen sowie Verschließen der fertigen Packung, wobei zum Transport des jeweils wenigstens einen Schlauches eine drehbare Transporteinrichtung, die entsprechend der Anzahl der Stationen um jeweils einen Winkel gedreht wird, vorgesehen ist.

Durch die drehbare Transporteinrichtung lassen,sich gleichzeitig eine Mehrzahl vom Packungsmänteln verarbeiten, in dem diese mehrere Stationen durchlaufen.

In weiterer Ausgestaltung der Erfindung sind die verwendeten Ausgießelemente Schraubverschlüsse, wobei die Schraubverschlüsse zweckmäßigerweise jeweils mit bereits aufgeschraubtem Schraubdeckel appliziert werden. Dies bedeutet, dass die Stanzöffnung in der Packung einen Durchmesser aufweist, der im wesentlichen dem Außendurchmesser des Schraubdeckels entspricht. Zur Befestigung der Ausgießelemente weisen diese jeweils einen Flansch auf, der mit der Innenseite der Packung verbunden, vorzugsweise vollflächig verklebt oder verschweißt wird.

Nach einer anderen vorteilhaften Ausgestaltung der Erfindung ist eine weitere Station zur Übergabe der mit einem Ausgießelement versehenen Schläuche an nachgeschaltete Einheiten vorgesehen. Hierfür kann eine Übergabeeinrichtung vorgesehen sein, mit deren Hilfe die Schläuche um eine waagerechte Achse um 180° verschwenkt und einem Dornrad zugeführt werden, wo die Bildung des Packungsbodens erfolgt.

Eine andere Lehre der Erfindung ist vorgesehen, dass eine weitere Station zum Ausschleusen nicht oder nicht ordnungsgemäß mit einem Ausgießelement versehener Schläuche dient. Hierbei können die nicht ordnungsgemäß verarbeiteten Schläuche auf der Transporteinrichtung verbleiben, bis sie in der Station zum Ausschleusen angekommen sind. Dort werden sie mit mechanischen oder pneumatischen Mitteln von der Transporteinrichtung entfernt.

Besonders bevorzugt weist die Transporteinrichtung vier Stationen auf, wobei jede Station mehrere Aufnahmeeinrichtungen für die jeweilige Bearbeitung aufweist. Hierbei ist es vorteilhaft, wenn die Aufnahmeeinrichtungen auf der Transporteinrichtung entlang den Außenseiten eines Quadrates angeordnet sind.

Damit die Packungszuschnitte von der Transporteinrichtung in aufgefaltetem Zustand übernommen werden können, ist der Transporteinrichtung eine Einrichtung zum Auffalten der Packungsmäntel zu Schläuchen vorgeschaltet.

Eine Packung, insbesondere quaderförmige Kartonverbundpackung, mit einem einen Befestigungsflansch aufweisenden Ausgießelement, insbesondere einen mit einer Schraubkappe wiederverschließbaren Schraubverschluss, ist nach dem oben genannten Verfahren hergestellt. Hierbei ist zweckmäßigerweise das Ausgießelement derart an der Innenseite des Schlauches appliziert, dass der Flansch des Ausgießelementes im wesentlichen bündig mit der Innenwandung des Schlauches abschließt. Auf diese Weise kann der bereits mit dem Ausgießelement versehene Packungsschlauch auf einem Dornrad weiterverarbeitet werden, indem der offene Packungsschlauch mit dem darin befindlichen Ausgießelement über einen Dorn gestülpt wird, damit die Siegelung des Packungsbodens stattfinden kann.

Die Erfindung wird nachfolgend anhand einer lediglich ein bevorzugtes Ausführungsbeispiel darstellenden Zeichnung näher erläutert. In der Zeichnung zeigen
- Fig. 1: schematisch, eine erfindungsgemäße Vorrichtung in perspektivischer Ansicht in Materialflussrichtung und
- Fig. 2: schematisch, die Erfindungsgemäße Vorrichtung aus Fig. 1 in einer weiteren perspektivischen Ansicht entgegen der Materialflussrichtung.

Der Ablauf des erfindungsgemäßen Verfahrens läßt sich wie folgt beschreiben:

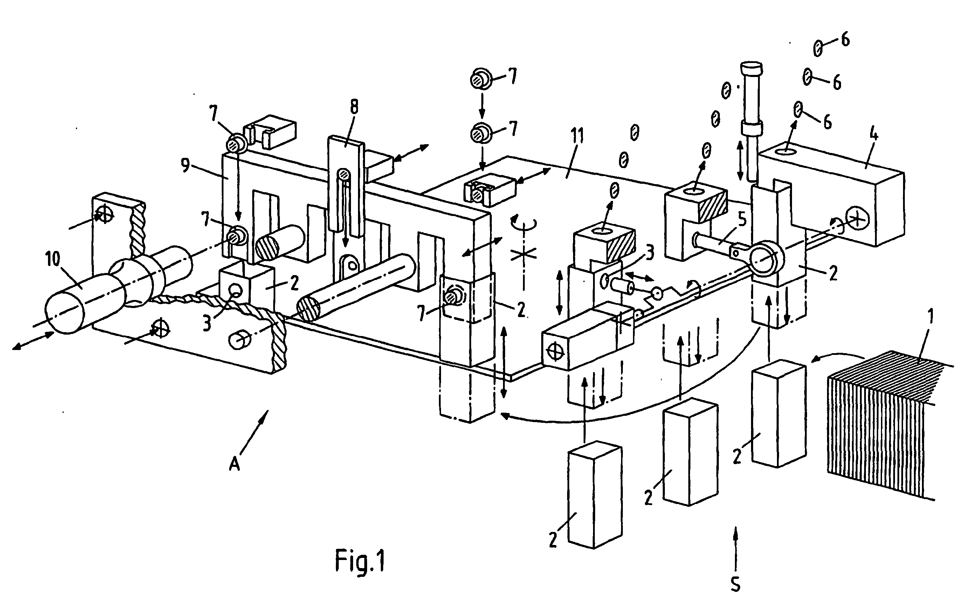

In Fig. 1 ist erkennbar, dass in einer Stanzstation S eine Vielzahl flachgefalteter Packungsmäntel 1 einer nicht dargestellten Auffaltstation zugeführt werden, von der aus die jeweils zu einem rechteckigen Schlauch 2 geformten Packungsmäntel zum Herstellen einer Stanzöffnung 3 an eine Stanzeinheit 4 übergeben werden, in der ein Stanzstößel 5 die Stanzöffnung 3 exakt positioniert herstellt. In dieser Stanzstation S werden auch die ausgestanzten Butzen 6 des Mehrschichtverbundes aus den Stanzeinheiten 4 entfernt.

Anschließend werden die mit der Stanzöffnung 3 versehen Packungsschläuche 2 einer Station A zum Applizieren von Ausgießelementen 7 zugeführt.

Die Zuführung der Ausgießelemente 7 erfolgt dabei in der Station A über nicht dargestellte Zuführschienen, wobei ein Schieber 8 das jeweils am Ende der zugeführten Ausgießelemente 7 befindliche Ausgießelement 7 einem Werkzeug 9 übergibt, welches das jeweilige Ausgießelement 7 in den Packungsschlauch 2 einführt und das Ausgießelement 7 von innen durch die Stanzöffnung 3 nach außen durchsteckt.

Danach dient das Werkzeug 9 als Amboss für den Schweißvorgang. Beim sich anschließenden Schweißvorgang wird der Flansch des Ausgießelements 7 mit dem um die Stanzöffnung 3 angrenzenden Mehrschichtverbundmaterial verschweißt, indem eine eine Öffnung zur Aufnahme der Schraubkappe aufweisende Sonotrode 10 axial zugeführt wird.

Im dargestellten und insoweit bevorzugten Ausführungsbeispiel erfolgt die Übergabe der Packungsschläuche 2 von Station A bzw. S an Stationen F bzw. D mittels einer Transporteinrichtung 11, welche als quadratische Drehscheibe ausgebildet ist. An ihren Außenseiten sind nicht näher bezeichnete Aufnahmeeinrichtungen vorgesehen, die im Ausführungsbeispiel jeweils drei Schläuche 2 auf einer Seite aufnehmen können. Von der Station A zum Applizieren der Ausgießelemente 7 werden die nun damit versehen Packungsschläuche 2 durch eine weitere 90°-Drehung der Transporteinrichtung 11 der Station F zugeführt, die der Übergabe der Packungsschläuche 2 an nachgeschaltete Einrichtungen zum Herstellen des Packungsbodens und Füllen sowie Verschließen der fertigen Packung dient.

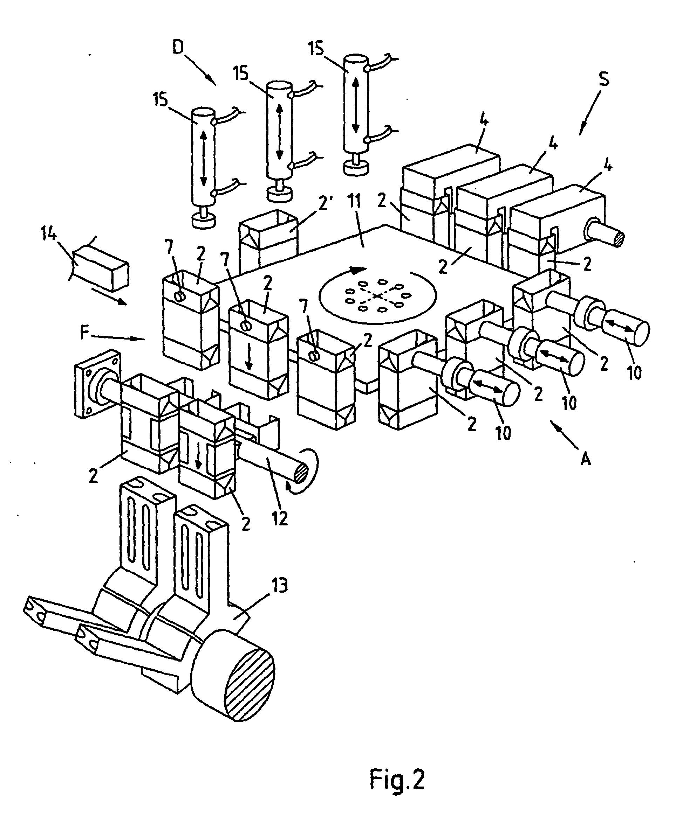

Im in Fig. 2 gezeigten Ausführungsbeispiel werden dazu die Packungsschläuche 2 mittels einer Übergabeeinrichtung um eine waagerechte Achse 12 um 180° geschwenkt und auf Dorne eines Dornrades 13 gestülpt, wobei beim Dornrad 13 zur größeren Übersichtlichkeit lediglich zwei parallele Dorne dargestellt sind.

Besonders zweckmäßig ist es, wenn die noch von der Transporteinrichtung 11 aufgenommenen Packungsschläuche 2 vor der Übergabe durch einen entsprechend ausgebildeten Sensor 14 daraufhin untersucht werden, ob die Ausgießelemente richtig appliziert worden sind. Werden vom Sensor 14 nicht oder nicht ordnungsgemäß mit einem Ausgießelement versehene Schläuche 2 detektiert, verbleiben diese in der Transporteinrichtung 11 und werden mit einer weiteren 90°-Drehung einer Station (D) zum Ausschleusen der Ausschussware zugeführt. In Fig. 2 ist dies bei dem Packungsschlauch 2' schematisch dargestellt. Zum Ausschleusen können hierbei (nur schematisch angedeutete) Kolben/Zylinder-Einheiten 15 verwendet werden.

Es ist schnell ersichtlich, dass die erfindungsgemäße Vorrichtung besonders platzsparend aufgebaut ist, und durch die jeweiligen 90°-Drehungen mit einer relativ schnellen Taktrate arbeiten kann. Dabei stehen die peripher angeordneten Bearbeitungswerkzeuge fest, so dass für die Weitergabe der Schläuche 2 nur relativ geringe Massen bewegt werden müssen.

## Patentansprüche

1. Verfahren zum Applizieren von Ausgießelementen an Packungen, insbesondere an quaderförmigen Mehrschichtverbundpackungen für Flüssigkeiten, **gekennzeichnet durch** die folgenden Schritte:
- Zuführen von flachgefalteten Packungsmänteln (1),
- Vereinzeln, ggf. Vorfalten und Auffalten der Packungsmäntel (1) zu jeweils einem rechteckigen Schlauch (2),
- Transport des wenigstens einen Schlauches (2) in eine Stanzstation (S), in der eine Öffnung (3) zur Aufnahme des Ausgießelementes (7) in den Schlauch (2) gestanzt wird,
- Transport des wenigstens einen Schlauches (2) in eine Station (A) zum Applizieren von Ausgießelementen (7) in die in der Stanzstation (S) hergestellten Öffnungen (3),
- Herstellen des Packungsbodens und
- Füllen sowie Verschließen der fertigen Packung.

2. Verfahren nach Anspruch 1,
**dadurch gekennzeichnet, dass** die Ausgießelemente (7) Schraubverschlüsse sind.

3. Verfahren nach Anspruch 2,
**dadurch gekennzeichnet, dass** die Schraubverschlüsse jeweils mit bereits aufgeschraubtem Schraubdeckel appliziert werden.

4. Verfahren nach einem der Ansprüche 1 bis 3,
**dadurch gekennzeichnet, dass** die Ausgießelemente jeweils einen Flansch aufweisen, der mit der Innenseite der Packung vollflächig verklebt wird.

5. Verfahren nach einem der Ansprüche 1 bis 3,
**dadurch gekennzeichnet, dass** die Ausgießelemente jeweils einen Flansch aufweisen, der mit der Innenseite der Packung vollflächig verschweißt wird.

6. Vorrichtung zum Applizieren von Ausgießelementen an Packungen, insbesondere an quaderförmigen Mehrschichtverbundpackungen für Flüssigkeiten, **gekennzeichnet durch** eine Stanzstation (S), in der eine Öffnung (3) zur Aufnahme eines Ausgießelementes (7) in einen zugeführten aufgefalteten Schlauch (2) gestanzt wird, eine Station (A) zum Applizieren der Ausgießelemente (7) in die in der Stanzstation (S) hergestellten Öffnungen (3) sowie gegebenenfalls weitere Stationen zum Herstellen des Packungsbodens und Füllen sowie Verschließen der fertigen Packung, wobei zum Transport des jeweils wenigstens einen Schlauches (2) eine drehbare Transporteinrichtung (11), die entsprechend der Anzahl der Stationen um jeweils einen Winkel gedreht wird, vorgesehen ist.

7. Vorrichtung nach Anspruch 6,
**dadurch gekennzeichnet, dass** eine weitere Station (F) zur Übergabe der mit einem Ausgießelement (7) versehenen Schläuche (2) an nachgeschaltete Einheiten vorgesehen ist.

8. Vorrichtung nach Anspruch 7,
**dadurch gekennzeichnet, dass** als nachgeschaltete Einheit eine Übergabeeinrichtung vorgesehen ist, mit deren Hilfe die Schläuche um eine waagrerechte Achse (12) um 180° verschwenkt und einem Dornrad (13) zugeführt werden, wo die Bildung des Packungsbodens erfolgt.

9. Vorrichtung nach einem der Ansprüche 6 bis 8,
**dadurch gekennzeichnet, dass** eine weitere Station (D) zum Ausschleusen nicht oder nicht ordnungsgemäß mit einem Ausgießelement (7) versehener Schläuche (2) vorgesehen ist.

10. Vorrichtung nach einem der Ansprüche 6 bis 9,
**dadurch gekennzeichnet, dass** jede Station (S, A, F, D) eine Mehrzahl von Aufnahmeeinrichtungen zur Aufnahme mehrerer Schläuche (2) aufweist.

11. Vorrichtung nach Anspruch 10,
**dadurch gekennzeichnet, dass** die Transporteinrichtung (11) vier Stationen (S, A, F, D) aufweist.

12. Vorrichtung nach einem der Ansprüche 9 bis 11,
**dadurch gekennzeichnet, dass** jede Station (S, A, F, D) mehrere Aufnahmeeinrichtungen aufweist.

13. Vorrichtung nach Anspruch 11 oder 12,
**dadurch gekennzeichnet, dass** die Aufnahmeeinrichtungen auf der Transporteinrichtung (11) entlang den Außenseiten eines Quadrates angeordnet sind.

14. Vorrichtung nach einem der Ansprüche 6 bis 13,
**dadurch gekennzeichnet, dass** der Transporteinrichtung (11) wenigstens eine Einrichtung zum Auffalten der Packungsmäntel (1) in Schläuche (2) vorgeschaltet ist.

## Claims

1. A method for applying pouring elements to packaging, especially rectangular multilayer composite packages for liquids, **characterised by** the following steps:
- supplying flat-folded packaging sleeves (1),
- separating, optionally pre-folding and unfolding packaging sleeves (1) to form respectively one rectangular tube (2),
- transporting the at least one tube (2) to a punching station (S) in which an opening (3) for receiving the pouring element (7) is punched into the tube (2),
- transporting the at least one tube (2) to a station (A) for applying pouring elements (7) into the openings (3) made in the punching station (S),
- producing the packaging base and
- filling and sealing the finished package.

2. The method according to claim 1,
**characterised in that** the pouring elements (7) are screw closures.

3. The method according to claim 2,
**characterised in that** the screw closures are each applied with screw caps which are already screwed on.

4. The method according to any one of claims 1 to 3,
**characterised in that** the pouring elements each have a flange which is glued to the inside of the packaging over the entire area.

5. The method according to any one of claims 1 to 3,
**characterised in that** the pouring elements each have a flange which is welded to the inside of the packaging over the entire area.

6. A device for applying pouring elements to packaging, especially rectangular multilayer composite packages for liquids, **characterised by** a punching station (S) in which an opening (3) for receiving a pouring element (7) is punched into a supplied unfolded tube (2), a station (A) for applying pouring elements (7) into the openings (3) made in the punching station (S), and optionally further stations for producing the packaging base and filling and sealing the finished package, wherein a rotatable transport device (11) which is rotated through respectively one angle according to the number of stations, is provided for transporting the respectively at least one tube (2).

7. The device according to claim 6,
**characterised in that** a further station (F) is provided for transferring the tubes (2) provided with a pouring element (7) to units located subsequently.

8. The device according to claim 7,
**characterised in that** a transfer device is provided as a subsequently located unit by which means the tubes are swivelled by 180° about a horizontal axis (12) and are supplied to a mandrel wheel (13) where the package base is formed.

9. The device according to any one of claims 6 to 8,
**characterised in that** a further station (D) is provided for extracting tubes (2) which have not been provided or have not been correctly provided with a pouring element (7).

10. The device according to any one of claims 6 to 9,
**characterised in that** each station (S, A, F, D) comprises a plurality of receiving stations for receiving a plurality of tubes (2).

11. The device according to claim 10,
**characterised in that** the transporting device (11) comprises four stations (S, A, F, D).

12. The device according to any one of claims 9 to 11,
**characterised in that** each station (S, A, F, D) comprises a plurality of receiving devices.

13. The device according to claim 11 or 12,
**characterised in that** the receiving devices are arranged on the transporting device (11) along the outsides of a square.

14. The device according to any one of claims 6 to 13,
**characterised in that** at least one device for unfolding the packaging sleeve (1) into tubes (2) is located before the transporting device (11).

## Revendications

1. Procédé pour appliquer des éléments verseurs sur des emballages, en particulier sur des emballages parallélépipédiques à plusieurs couches pour liquides,
**caractérisé par** les étapes suivantes :
- amenée d'enveloppes d'emballage (1) pliées à plat,
- séparation, éventuellement pré-pliage et dépliage des enveloppes d'emballage (1) en un tuyau rectangulaire (2),
- transport du au moins un tuyau (2) dans un poste d'estampage (S) dans lequel une ouverture (3) est découpée dans le tuyau (2) pour recevoir l'élément verseur (7),
- transport du au moins un tuyau (2) dans un poste (A) pour appliquer des éléments verseurs (7) dans les ouvertures (3) réalisées au poste d'estampage (S),
- réalisation du fond de l'emballage et
- remplissage ainsi que fermeture de l'emballage fini.

2. Procédé selon la revendication 1,
**caractérisé en ce que** les éléments verseurs (7) sont des bouchons à vis.

3. Procédé selon la revendication 2,
**caractérisé en ce que** les bouchons à vis sont appliqués chacun avec couvercle à vis déjà vissé dessus.

4. Procédé selon l'une des revendications 1 à 3,
**caractérisé en ce que** les éléments verseurs présentent chacun une bride qui est collée sur toute sa surface avec la face intérieure de l'emballage.

5. Procédé selon l'une des revendications 1 à 3,
**caractérisé en ce que** les éléments verseurs présentent chacun une bride qui est soudée sur toute sa surface avec la face intérieure de l'emballage.

6. Dispositif pour appliquer des éléments verseurs sur des emballages, en particulier des emballages parallélépipédiques à plusieurs couches pour liquides,
**caractérisé par** un poste d'estampage (S) dans lequel une ouverture est découpée dans un tuyau (2) déplié amené, pour recevoir un élément verseur (7), un poste (A) pour appliquer les éléments verseurs (7) dans les ouvertures (3) réalisées au poste d'estampage (S) ainsi qu'éventuellement d'autres postes pour réaliser le fond de l'emballage et le remplissage ainsi que la fermeture de l'emballage fini, un dispositif de transport (11) rotatif, qui est tourné chaque fois d'un angle correspondant au nombre de postes, étant prévu pour le transport du au moins un tuyau (2).

7. Dispositif selon la revendication 6,
**caractérisé en ce qu'**il est prévu un autre poste (F) pour transférer les tuyaux (2) pourvus d'un élément verseur (7) à des unités situées en aval.

8. Dispositif selon la revendication 7,
**caractérisé en ce qu'**il est prévu comme unité située en aval un dispositif de transfert à l'aide duquel les tuyaux sont pivotés de 180° autour d'un axe horizontal (12) et sont amenés à une roue à mandrins (13) où est formé le fond de l'emballage.

9. Dispositif selon l'une des revendications 6 à 8,
**caractérisé en ce qu'**il est prévu un autre poste (D) pour rejeter des tuyaux (2) non pourvus ou pourvus incorrectement d'un élément verseur (7).

10. Dispositif selon l'une des revendications 6 à 9,
**caractérisé en ce que** chaque poste (S, A, F, D) comporte une pluralité de dispositifs de réception pour recevoir plusieurs tuyaux (2).

11. Dispositif selon la revendication 10,
**caractérisé en ce que** le dispositif de transport (11) comporte quatre postes (S, A, F, D).

12. Dispositif selon l'une des revendications 9 à 11,
**caractérisé en ce que** chaque poste (S, A, F, D) comporte plusieurs dispositifs de réception.

13. Dispositif selon la revendication 11 ou 12,
**caractérisé en ce que** les dispositifs de réception sont disposés sur le dispositif de transport (11) le long des côtés extérieurs d'un carré.

14. Dispositif selon l'une des revendications 6 à 13,
**caractérisé en ce qu'**en amont du dispositif de transport (11) est monté au moins un dispositif pour déplier les enveloppes d'emballage (1) en tuyaux (2).
